# FASCICULE DE BREVET EUROPEEN

(11) **EP 0 999 627 B1**
(45) Date de publication et mention de la délivrance du brevet: **03.01.2007**
(21) Numéro de dépôt: 99402730.8
(22) Date de dépôt: 03.11.1999
(51) Int. Cl.: H02G 3/04

(54) **Socle de goulotte à trous préformés, et son procédé d'obtention**
Sockel für Kabelkanal mit vorgeformten Bohrungen und Verfahren ihrer Herstellung
Raceway base with preformed holes and method for obtaining same

(30) Priorité: 06.11.1998 FR 9813984
(43) Date de publication de la demande: 10.05.2000
(73) Titulaire: LEGRAND FRANCE, 87000 Limoges (FR); LEGRAND SNC, 87000 Limoges (FR)
(72) Inventeur: Buard, Yvon, 53600 Voutre (FR); Tabuteau, Pascal, 72140 Peze le Robert (FR)
(74) Mandataire: Santarelli

(56) Documents cités:
- FR-A- 2 082 874
- FR-A- 2 536 219
- GB-A- 2 284 366

## Description

La présente invention concerne d'une manière générale les goulottes du type de celles mises en oeuvre, par exemple, pour le support, le logement et la protection de divers appareillages, et, en particulier, de divers appareillages électriques, aussi bien que pour le support, le logement et la protection des conducteurs ou autres canalisations nécessaires à la desserte de ces appareillages.

Ainsi qu'on le sait, ces goulottes comportent, globalement, d'une part, un socle, par lequel elles sont destinées à être rapportées sur une quelconque paroi, par exemple un mur, et dont la section transversale est ouverte, et, d'autre part, un couvercle, qui, pour la fermeture de l'ensemble, est adapté à être rapporté sur le socle, par exemple par encliquetage.

Le socle de ces goulottes, plus simplement appelé socle de goulotte dans ce qui suit, comporte, lui-même, pour l'essentiel, un fond, par lequel il peut être appliqué à la paroi à équiper, et par lequel se fait la fixation de l'ensemble à celle-ci.

Il peut également comporter le long de l'un et/ou l'autre de ses bords longitudinaux, une aile latérale, de hauteur plus ou moins importante.

Le plus souvent, la fixation d'un tel socle de goulotte sur la paroi à équiper se fait directement à travers son fond.

Par exemple, ce socle de goulotte comporte, préformés par avance sur ce fond, au moins deux trous de fixation, qui, bien entendu, sont écartés longitudinalement l'un de l'autre pour être propres à une telle fixation.

En pratique, une pluralité de trous de fixation sont ainsi prévus longitudinalement de place en place, pour permettre plus facilement in situ, à l'installateur, de satisfaire au mieux aux conditions locales de fixation à respecter.

Cette disposition a donc l'avantage d'offrir une grande souplesse de mise en oeuvre à l'installateur ; elle a également pour avantage de permettre une fixation rapide du socle de goulotte.

Mais elle a pour inconvénient de nuire à l'isolation de son fond au niveau des trous de fixation non utilisés, ce qui conduit à écarter de certaines applications des socles de goulotte dont le fond présente ainsi des trous de fixation préformés, notamment lorsque la goulotte correspondante doit satisfaire au logement de conducteurs électriques avec une simple isolation.

C'est pourquoi, pour de telles applications, sont plus communément mis en oeuvre des socles de goulotte à fond plein, à charge, pour l'installateur, de réaliser par lui-même, in situ, dans celui-ci, les trous de fixation nécessaires.

La fixation d'un tel socle de goulotte à fond plein s'en trouve inévitablement compliquée d'autant.

Pour éviter la mise en oeuvre de trous de fixation, il a par ailleurs été proposé d'assurer la fixation d'un socle de goulotte à l'aide de divers accessoires.

Cela est le cas, par exemple, dans le brevet américain No 2 921 607, suivant lequel des accessoires en forme de U doivent d'abord être implantés de place en place sur la paroi à équiper avant qu'on y engage le socle de goulotte à fixer à celle-ci.

Mais, pour une pose correcte d'un tel socle de goulotte, ces accessoires doivent être strictement alignés les uns avec les autres, ce qui n'est pas toujours aisé à assurer.

En outre, visibles extérieurement, ils nuisent à l'esthétique de l'ensemble.

Les documents FR-A- 2 082 874 et FR-A-2 536 219 décrivent un socle de goulotte du genre mentionné ci-dessus.

La présente invention a d'une manière générale pour objet une disposition permettant d'éviter de tels inconvénients.

De manière plus précise, elle a tout d'abord pour objet un socle de goulotte du genre comportant un fond, par lequel il peut être appliqué à une quelconque paroi, et qui présente au moins deux trous de fixation écartés longitudinalement l'un de l'autre, ce socle de goulotte étant d'une manière générale caractérisé en ce que chacun des trous de fixation que présente son fond est obturé par un bouchon susceptible d'en être éliminé ; elle a encore pour objet un procédé propre à l'obtention d'un tel socle de goulotte.

En bref, le socle de goulotte suivant l'invention, qui présente, sur son fond, des trous de fixation préformés, est, suivant l'invention, avantageusement livré avec ces trous de fixation obturés.

Il suffit, in situ, à l'installateur, de libérer ceux de ces trous de fixation dont il a besoin, en éliminant de ces trous de fixation le bouchon qui les obture, ce qui, en pratique, peut être assuré très aisément à l'aide d'un quelconque outil courant, par exemple à l'aide d'un simple tournevis.

Mais les trous de fixation inutilisés demeurent alors avantageusement encore chacun obturés par un bouchon.

Du point de vue de l'isolation, tout se passe donc comme si le socle de goulotte était un socle à fond plein.

Suivant un procédé préférentiel de mise en oeuvre, pour l'obtention d'un tel socle de goulotte à fond présentant des trous de fixation obturés par un bouchon, on assure, de manière usuelle, par extrusion, la réalisation de ce socle de goulotte, et, après cette extrusion, on soumet ce socle de goulotte à une opération de poinçonnage qui, pour chaque trou de fixation recherché, comporte, successivement, deux phases, à savoir, une première phase au cours de laquelle un premier poinçon intervient suivant un premier sens sur le fond, en défonçant celui-ci sur une partie au moins de son épaisseur, et une deuxième phase au cours de laquelle un deuxième poinçon intervient suivant un deuxième sens, inverse du précédent, sur la partie précédemment défoncée du fond, en refoulant celle-ci dans le trou de fixation même dont elle est issue.

Ainsi, suivant ce procédé, le bouchon obturant chaque trou de fixation du fond provient de ce fond lui-même, en étant directement formé par la partie préalablement poinçonnée de celui-ci.

Bien qu'intervenant après un processus d'extrusion, un tel procédé d'obtention est avantageusement simple et économique à mettre en oeuvre.

En outre, lorsque le bouchon obturant un trou de fixation est éliminé, il conduit avantageusement à l'obtention d'un trou de fixation dont la découpe est particulièrement nette, en étant notamment exempte de toute bavure pouvant occasionner une blessure à l'installateur ou aux conducteurs électriques.

Les caractéristiques et avantages de l'invention ressortiront d'ailleurs de la description qui va suivre, à titre d'exemple, en référence aux dessins schématiques annexés sur lesquels :
la figure 1 est une vue partielle en perspective d'un socle de goulotte suivant l'invention ;
la figure 2 en est, à échelle supérieure, une vue partielle en coupe longitudinale, suivant la ligne II-II de la figure 1 ;
les figures 3A, 3B sont des vues partielles en coupe longitudinale, qui, dérivées de celle de la figure 2, illustrent deux phases successives de l'opération de poinçonnage conduisant à la formation et à l'obturation d'un trou de fixation dans le fond de ce socle de goulotte ;
la figure 4 est une vue partielle en coupe longitudinale, qui, elle aussi analogue à celle de la figure 2, illustre l'élimination ultérieure du bouchon obturant un tel trou de fixation.

Tel qu'illustré sur ces figures, et de manière connue en soi, un socle de goulotte 10 suivant l'invention comporte un fond 11 par lequel il peut être appliqué à une quelconque paroi non représentée.

Dans la forme de réalisation représentée à titre d'exemple, ce socle de goulotte 10 comporte, outre le fond 11, suivant globalement un profil transversal en U, deux ailes latérales 12, qui s'étendent sensiblement perpendiculairement au fond 11, et qui, l'une et l'autre de même hauteur, comportent, en direction l'une de l'autre, le long de leur bord libre, un retour 13 formant à son extrémité une rainure 14 pour l'encliquetage d'un couvercle non représenté.

De même, dans la forme de réalisation représentée, le fond 11 présente, à titre d'exemple, en saillie, longitudinalement, sur sa surface interne 15, deux nervures 16, à profil transversal en T, pour la fixation éventuelle, par encliquetage, d'un quelconque accessoire et/ou d'un quelconque appareillage également non représenté.

Bien connues par elles-mêmes, les dispositions correspondantes ne seront pas décrites plus en détail ici, et elles ne doivent d'ailleurs pas être considérées comme en quoi que ce soit limitatives de l'invention.

De manière connue en soi, enfin, le fond 11 du socle de goulotte 10 suivant l'invention présente au moins deux trous de fixation 17, écartés longitudinalement l'un de l'autre.

Préférentiellement, et cela est le cas dans la forme de réalisation représentée, le fond 11 présente, en pratique, longitudinalement, de place en place, une pluralité de trous de fixation 17 alignés suivant au moins une rangée.

Dans la forme de réalisation représentée, seule une rangée de trous de fixation 17 est prévue, et elle s'étend dans la zone médiane du fond 11, entre ses nervures 16.

Il va de soi, cependant, que d'autres rangées de trous de fixation 17 pourraient tout aussi bien être prévues, en s'étendant, par exemple, de part et d'autre des nervures 16, entre celles-ci et les ailes latérales 12.

Préférentiellement, les trous de fixation 17 d'une même rangée sont établis à un pas régulier.

Préférentiellement, également, et tel que représenté, ils ont un contour circulaire.

Suivant l'invention, chacun des trous de fixation 17 que présente ainsi le fond 11 du socle de goulotte 10 est obturé par un bouchon 18 susceptible d'en être éliminé.

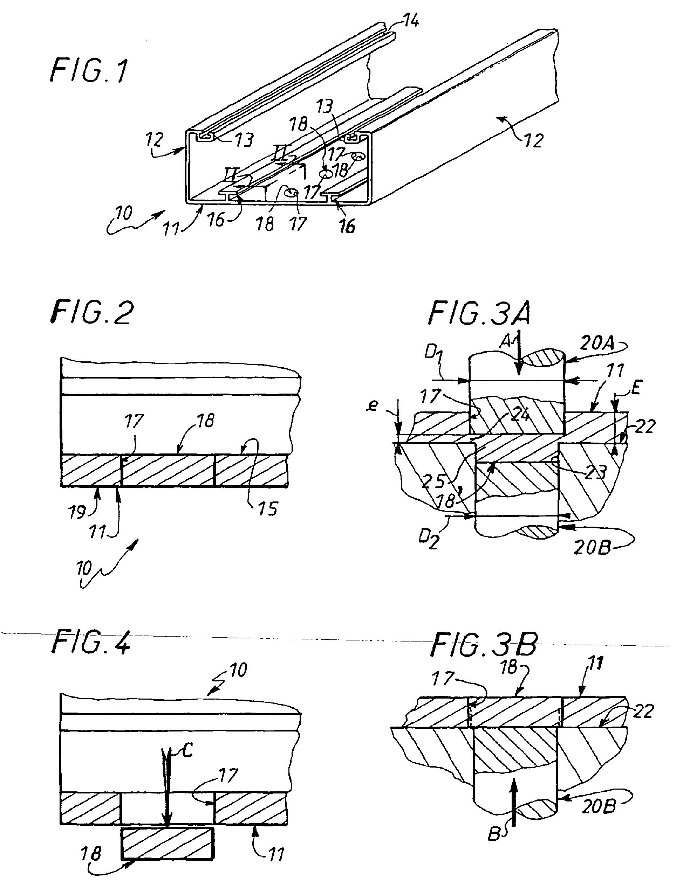

Dans la forme de réalisation représentée, pour chacun des trous de fixation 17, et ainsi qu'il apparaît mieux sur la figure 2 pour l'un de ceux-ci, le bouchon 18 s'étend à niveau avec la surface interne 15 du fond 11.

De même, dans cette forme de réalisation, ce bouchon 18 s'étend à niveau avec la surface externe 19 du fond 11.

Préférentiellement, pour l'obtention d'un socle de goulotte dont le fond 11 présente ainsi des trous de fixation 17 préformés et obturés par un bouchon 18, il est procédé comme suit.

Dans un premier temps, on assure, de manière usuelle, par extrusion, la réalisation de ce socle de goulotte 10.

Dans un deuxième temps, on soumet, après cette extrusion, et, par exemple, immédiatement après celle-ci, le socle de goulotte 10 à une opération de poinçonnage qui, pour chaque trou de fixation 17 recherché, comporte, successivement, deux phases, à savoir, une première phase, figure 3A, au cours de laquelle, tel que schématisé par la flèche A sur cette figure 3A, un premier poinçon 20A intervient suivant un premier sens sur le fond 11, en défonçant celui-ci sur une partie au moins de son épaisseur E, et une deuxième phase, figure 3B, au cours de laquelle, tel que schématisé par une flèche B sur cette figure 3B, un deuxième poinçon 20B intervient suivant un deuxième sens, inverse du précédent, sur la partie 18' précédemment défoncée du fond 11, en refoulant celle-ci dans le trou de fixation 17 même dont elle est issue.

Préférentiellement, lors de la première phase de l'opération de poinçonnage, on contrebute, par le deuxième poinçon 20B, la partie 18' défoncée du fond 11, au fur et à mesure du défonçage de celle-ci.

Préférentiellement, également, et tel que représenté, on fait en sorte que le premier poinçon 20A ne défonce le fond 11 que sur une fraction de son épaisseur E, qui, par exemple, et tel que représenté, est supérieure à la moitié de cette épaisseur E.

Préférentiellement, enfin, et tel que représenté, lors de la première phase de l'opération de poinçonnage, on contrebute le fond 11 par une matrice 22 ajourée d'un trou 23 dont le diamètre D2 est inférieur au diamètre D1 du premier poinçon 20A.

Il résulte de ce qui précède que la partie 18' du fond 11 défoncée par le premier poinçon 20A comporte, successivement, à compter de ce premier poinçon 20A, deux tronçons, à savoir, un tronçon de plus grand diamètre 24, dont le diamètre est égal au diamètre D1 du premier poinçon 20A, et un tronçon de moindre diamètre 25, dont le diamètre est égal au diamètre D2 du trou 23 de la matrice 22.

Le tronçon de plus grand diamètre 24 constitue ainsi en quelque sorte une garde, de hauteur e, grâce à laquelle la partie 18' défoncée du fond 11 reste initialement avantageusement attenante à celui-ci.

Préférentiellement, et tel que représenté, lors de la deuxième phase de l'opération de poinçonnage, on fait intervenir le deuxième poinçon 20B à la faveur du trou 23 de la matrice 22 mise en oeuvre lors de la première phase.

Autrement dit, ce deuxième poinçon 20B a un diamètre nominal égal à celui du trou 23 de la matrice 22.

Quoi qu'il en soit, lors de cette deuxième phase de l'opération de poinçonnage, la partie 18' défoncée du fond 11 se détache de celui-ci, et, sous l'action du deuxième poinçon 20B, elle vient s'intégrer à pleine épaisseur à ce fond 11, en formant par elle-même le bouchon 18 recherché.

L'expérience montre que le bouchon 18 obturant ainsi un trou de fixation 17 a une tenue suffisante dans ce trou de fixation 17 pour qu'il reste en place dans celui-ci lors du transport et/ou des manipulations ultérieurs du socle de goulotte 10, malgré les inévitables chocs auxquels est alors soumis un tel socle de goulotte 10.

L'expérience montre, d'ailleurs, également, que, lorsque le matériau constitutif du socle de goulotte 10 est un matériau thermoplastique, l'élasticité naturelle propre à un tel matériau conduit le tronçon de moindre diamètre 25 que présente normalement le bouchon 18 en raison de son processus de formation à combler l'espace de faible amplitude qui le sépare de la partie correspondante de la paroi du trou de fixation 17, ce qui renforce encore la tenue de ce bouchon 18 dans ce trou de fixation 17.

C'est la raison pour laquelle, sur la figure 3B, le vide théorique correspondant n'a été que schématisé en traits interrompus.

De même, il est représenté plus ou moins comblé, en traits appuyés, sur la figure 2.

Dans la forme de mise en oeuvre représentée, lors de la première phase de l'opération de poinçonnage, le premier poinçon 20A intervient de l'intérieur vers l'extérieur par rapport au fond 11, et, lors de la deuxième phase, le deuxième poinçon 20B intervient de l'extérieur vers l'intérieur.

Mais il va de soi qu'une disposition inverse pourrait tout aussi bien être adoptée.

Quoi qu'il en soit, il suffit, à l'installateur, pour la fixation du socle de goulotte 10 suivant l'invention, d'éliminer, de chacun des trous de fixation 17 qu'il a l'intention de mettre en pratique pour cette fixation, et tel que schématisé par une flèche C pour l'un d'eux sur la figure 4, le bouchon 18 obturant jusque-là un tel trou de fixation 17.

Si désiré, cette élimination peut être facilitée en mettant en oeuvre un quelconque outil courant, tel que, par exemple, un tournevis, non représenté.

Quoi qu'il en soit, elle est très aisée.

## Revendications

1. Socle de goulotte du genre comportant un fond (11), par lequel il peut être appliqué à une quelconque paroi, et qui présente au moins deux trous de fixation (17) écartés longitudinalement l'un de l'autre, **caractérisé en ce que** chacun des trous de fixation (17) que présente son fond (11) est obturé par un bouchon (18) susceptible d'en être éliminé.

2. Socle de goulotte suivant la revendication 1, **caractérisé en ce que**, pour chacun des trous de fixation (17), le bouchon (18) s'étend à niveau avec la surface interne (15) du fond (11).

3. Socle de goulotte suivant l'une quelconque des revendications 1, 2, **caractérisé en ce que**, pour chacun des trous de fixation (17), le bouchon (18) s'étend à niveau avec la surface externe (19) du fond (11).

4. Socle de goulotte suivant l'une quelconque des revendications 1 à 3, **caractérisé en ce que** son fond (11) présente, longitudinalement, de place en place, une pluralité de trous de fixation (17) alignés suivant au moins une rangée.

5. Procédé pour l'obtention d'un socle de goulotte conforme à l'une quelconque des revendications 1 à 4, ce procédé étant du genre suivant lequel on assure par extrusion la réalisation de ce socle de goulotte, et étant **caractérisé en ce que**, après cette extrusion, on soumet ce socle de goulotte (10) à une opération de poinçonnage qui, pour chaque trou de fixation (17) recherché, comporte, successivement, deux phases, à savoir, une première phase au cours de laquelle un premier poinçon (20A) intervient suivant un premier sens sur le fond (11) en défonçant celui-ci sur une partie au moins de son épaisseur (E), et une deuxième phase au cours de laquelle un deuxième poinçon (20B) intervient suivant un deuxième sens, inverse du précédent, sur la partie (18') précédemment défoncée du fond (11), en refoulant celle-ci dans le trou de fixation (17) dont elle est issue.

6. Procédé suivant la revendication 5, **caractérisé en ce que**, lors de la première phase de l'opération de poinçonnage, on contrebute, par le deuxième poinçon (20B), la partie (18') défoncée du fond (11), au fur et à mesure du défonçage de celle-ci.

7. Procédé suivant l'une quelconque des revendications 5, 6, **caractérisé en ce qu'**on fait en sorte que le premier poinçon (20A) ne défonce le fond (11) que sur une fraction de son épaisseur (E).

8. Procédé suivant l'une quelconque des revendications 5 à 7, **caractérisé en ce que**, lors de la première phase de l'opération de poinçonnage, on contrebute le fond (11) par une matrice (22) ajourée d'un trou (23) dont le diamètre (D2) est inférieur au diamètre (D1) du premier poinçon (20A).

9. Procédé suivant la revendication 8, **caractérisé en ce que**, lors de la deuxième phase de l'opération de poinçonnage, on fait intervenir le deuxième poinçon (20B) à la faveur du trou (23) de la matrice (22) mise en oeuvre lors de la première phase.

10. Procédé suivant l'une quelconque des revendications 5 à 9, **caractérisé en ce que**, lors de la première phase de l'opération de poinçonnage, le premier poinçon (20A) intervient de l'intérieur vers l'extérieur, et, lors de la deuxième phase, le deuxième poinçon (20B) intervient de l'extérieur vers l'intérieur.

## Claims

1. Trunking base section including a back (11) which can be applied to a wall of any kind and which has at least two fixing holes (17) which are longitudinally spaced from one another, **characterized in that** each of the fixing holes (17) that its back (11) has is blanked off by a plug (18) that can be moved therefrom.

2. Trunking base section according to claim 1, **characterized in that** the plug (18) for each fixing hole (17) is flush with the inside surface (15) of the back (11).

3. Trunking base section according to either of claims 1 and 2, **characterized in that** the plug (18) for each fixing hole (17) is flush with the outside surface (19) of the back (11).

4. Trunking base section according to any one of claims 1 to 3, **characterized in that** its back (11) has a plurality of longitudinally spaced fixing holes (17) arranged in one or more rows.

5. Method of manufacturing a trunking base section according to any one of claims 1 to 4, this method being of the type according to which the trunking base section is extruded and being **characterized in that**, after said extrusion, said trunking base section (10) undergoes a punching operation which comprises two successive phases for each fixing hole (17) required, namely a first phase during which a first punch (20A) impinges on the back (11) in a first direction, depressing it to at least part of its thickness (E), and a second phase during which a second punch (20B) impinges in a second direction opposite to the first direction on the previously depressed portion (18') of the back (11), pushing it back into the fixing hole (17) from which it came.

6. Method according to claim 5, **characterized in that** the depressed portion (18') of the back (11) is braced by the second punch (20B) as it is depressed during the first phase of the punching operation.

7. Method according to either of claims 5 and 6, **characterized in that** the first punch (20A) depresses the back (11) to only a fraction of its thickness (E).

8. Method according to any of claims 5 to 7, **characterized in that** the back (11) is braced during the first phase of the punching operation by a die (22) in which there is a hole (23) whose diameter (D2) is less than the diameter (D1) of the first punch (20A).

9. Method according to claim 8, **characterized in that** the second punch (20B) operates during the second phase of the punching operation through the hole (23) in the die (22) used in the first phase.

10. Method according to any one of claims 5 to 9, **characterized in that** the first punch (20A) operates from the inside towards the outside during the first phase of the punching operation and the second punch (20B) operates from the outside towards the inside during the second phase.

## Patentansprüche

1. Kabelkanalsockel des Typs mit einem Boden (11), durch den er an einer beliebigen Wand befestigt werden kann und der wenigstens zwei längs voneinander beabstandete Befestigungslöcher (17) aufweist,
**dadurch gekennzeichnet, dass** jedes Befestigungsloch (17), das der Boden (11) aufweist, durch einen Verschluss (18) verschlossen ist, der daraus entfernt zu werden vermag.

2. Kabelkanalsockel nach Anspruch 1,
**dadurch gekennzeichnet, dass** der Verschluss (18) für jedes Befestigungsloch (17) höhengleich mit der Innenseite (15) des Bodens (11) verläuft.

3. Kabelkanalsockel nach einem der Ansprüche 1, 2,
**dadurch gekennzeichnet, dass** der Verschluss (18) für jedes Befestigungsloch (17) höhengleich mit der Außenseite (19) des Bodens (11) verläuft.

4. Kabelkanalsockel nach einem der Ansprüche 1 bis 3,
**dadurch gekennzeichnet, dass** sein Boden (11) in Längsrichtung hier und dort eine Vielzahl von Befestigungslöchern (17) aufweist, die in wenigstens einer Reihe fluchtend angeordnet sind.

5. Verfahren zum Erhalt eines Kabelkanalsockels nach einem der Ansprüche 1 bis 4, wobei das Verfahren solcherart ist, dass der Kabelkanalsockel durch Extrusion ausgeführt wird, und
**dadurch gekennzeichnet ist, dass** der Kabelkanalsockel (10) nach der Extrusion einem Stanzvorgang unterzogen wird, der für jedes gewünschte Befestigungsloch (17) nacheinander zwei Phasen umfasst, und zwar eine erste Phase, in deren Verlauf ein erster Stanzstempel (20A) gemäß einer ersten Richtung an dem Boden (11) angesetzt wird und diesen hierbei wenigstens in einem Teil seiner Dicke (E) eindrückt, und eine zweite Phase, in deren Verlauf ein zweiter Stanzstempel (20B) gemäß einer zweiten, zur ersten entgegengesetzten Richtung an dem zuvor eingedrückten Teil (18') des Bodens (11) angesetzt wird und hierbei diesen in das Befestigungsloch (17), aus dem er stammt, zurückdrängt.

6. Verfahren nach Anspruch 5,
**dadurch gekennzeichnet, dass** bei der ersten Phase des Stanzvorgangs der eingedrückte Teil (18') des Bodens (11) je nach Fortgang seines Eindrückens durch den zweiten Stanzstempel (20B) abgefangen wird.

7. Verfahren nach einem der Ansprüche 5, 6,
**dadurch gekennzeichnet, dass** so vorgegangen wird, dass der erste Stanzstempel (20A) den Boden (11) nur in einem Bruchteil seiner Dicke (E) eindrückt.

8. Verfahren nach einem der Ansprüche 5 bis 7,
**dadurch gekennzeichnet, dass** bei der ersten Phase des Stanzvorgangs der Boden (11) durch ein Gesenk (22) abgefangen wird, das mit einem Loch (23) durchbohrt ist, dessen Durchmesser (D2) kleiner ist als der Durchmesser (D1) des ersten Stanzstempels (20A).

9. Verfahren nach Anspruch 8,
**dadurch gekennzeichnet, dass** bei der zweiten Phase des Stanzvorgangs der zweite Stanzstempel (20B) mit Hilfe des Lochs (23) des in der ersten Phase eingesetzten Gesenks (22) angesetzt wird.

10. Verfahren nach einem der Ansprüche 5 bis 9,
**dadurch gekennzeichnet, dass** bei der ersten Phase des Stanzvorgangs der erste Stanzstempel (20A) von innen nach außen angesetzt wird und bei der zweiten Phase der zweite Stanzstempel (20B) von außen nach innen angesetzt wird.
